# EUROPÄISCHE PATENTSCHRIFT

(11) **EP 2 587 752 B1**
(45) Veröffentlichungstag und Bekanntmachung des Hinweises auf die Patenterteilung: **07.05.2014**
(21) Anmeldenummer: 11186921.0
(22) Anmeldetag: 27.10.2011
(51) Int. Cl.: H04L 27/24, G07C 5/00

(54) **Datenaustausch in einem Transportsystem unter verwendung der positiven und der negativen Halbwellen eines Wechselsignals zur Übertragung der Daten**
Data exchange in a transport system using positive and negative half-waves of an alternating signal for transmitting the data
Échange de données dans un système de transport en utilisant les demi-ondes positives et négatives pour la transmission des données

(43) Veröffentlichungstag der Anmeldung: 01.05.2013
(73) Patentinhaber: Siemens Aktiengesellschaft, 80333 München (DE)
(72) Erfinder: Rupf, Dr. Stephan, 09236 Claussnitz (DE); Wolf, Horst, 91056 Erlangen (DE)

(56) Entgegenhaltungen:
- DE-A1- 3 719 670
- DE-A1-102007 056 318
- GB-A- 1 241 860

## Beschreibung

Die Erfindung betrifft ein Verfahren zum Datenaustausch in einem Transportsystem, wobei Steuerbefehle von einer Steuereinheit zu einem Fahrzeug und Statusmeldungen von dem Fahrzeug zu der Steuereinheit übertragen werden, wobei über einen Signalgenerator ein Wechselsignal bereitgestellt wird und das Wechselsignal an einer ersten Datenleitung und einer zweiten Datenleitung angeschaltet wird, wobei das Wechselsignal in seinem zeitlichen Verlauf verändert wird, um durch die Veränderungen die Steuerbefehle und die Statusmeldungen zu übertragen.

Des Weiteren betrifft die Erfindung ein Fahrzeugsteuersystem zum Datenaustausch in einem Transportsystem, wobei eine Steuereinheit ausgestaltet ist, Steuerbefehle zu einem Fahrzeug und ein Fahrzeug ausgestaltet ist, Statusmeldungen zu der Steuereinheit zu übertragen, wobei ein Signalgenerator an einer ersten Datenleitung und einer zweiten Datenleitung angeschlossen ist und ein Wechselsignal bereitstellt. Unter Steuerbefehlen und Statusmeldungen sind quittierte oder unquittierte Datenübertragungen zu verstehen.

Im Sinne der Erfindung soll unter Transportsystem ein Fördersystem mit automatisch gesteuerten Fahrzeugen verstanden werden, deren Aufgabe es ist, Material oder Personen zu transportieren. Beispielsweise ist eine Elektrohängebahn ein Transportsystem. Die Elektrohängebahn ist ein schienengebundenes Fördermittel mit einzeln angetriebenen Fahrzeugen. Die Fahrzeuge können sich autonom und unabhängig voneinander auf dem Schienensystem bewegen.

Bei den Transportsystemen ist eine Transportbahn, beispielsweise ein Schienensystem, in Abschnitte unterteilt, vorzugsweise in Segmente, wobei sich auf diesen Segmenten Fahrzeuge oder Transportwagen in einer nahezu beliebigen Anzahl bewegen können.

Damit das Verhalten und somit ein Fahrprofil eines Transportwagens innerhalb des Transportsystems, beispielsweise einer Produktionsanlage für den Automobilbau, den unterschiedlichen Fertigungsprozessen angepasst werden kann, ist eine Kommunikation zwischen einer zentralen Anlagensteuerung und den Transportwagen notwendig. Weiterhin ist es für die zentrale Anlagensteuerung von Vorteil, wenn sie über das Verhalten der Transportwagen in Echtzeit informiert wird.

Aus der technischen Beschreibung der Firma LJU Automatisierungstechnik GmbH "Fahrwagensteuerung Baureihe ST-79x" ist ein eingangs genanntes Transportsystem und ein eingangs genanntes Verfahren zum Datenaustausch in den Transportsystemen bekannt. Nachteilig an dem bekannten Verfahren und der bekannten Vorrichtung ist es, dass zur Kommunikation von einer Steuereinheit bzw. einer zentralen Anlagensteuerung zu den Fahrzeugen und umgekehrt eine separate Steuerschiene und eine separate Meldeschiene verwendet werden muss, wobei diese eine unsymmetrische Datenübertragung aufweist, welche störanfällig ist.

Die DE 10 2007 056 318 A1 (DEERE & CO [US]) 16. Oktober 2008 (2008-10-16) offenbart ein Kommunikationssystem für ein Fahrzeug auf der Basis der Ethernet-Technologie.

Es ist daher die Aufgabe der vorliegenden Erfindung ein vereinfachtes Verfahren bzw. ein vereinfachtes Fahrzeugsteuersystem zum Datenaustausch bereitzustellen, welches eine erhöhte Störsicherheit aufweist.

Die Aufgabe wird durch ein Verfahren nach Anspruch 1 gelöst. Weitere Details dieses Verfahrens sind in den Unteransprüchen 2-8 angegeben.

Vorrichtungsgemäß wird die eingangs genannte Aufgabe durch ein Fahrzeugsteuersystem gemäß Anspruch 9 gelöst. Weitere Einzelheiten dieses Fahrzeugsteuersystems sind in Ansprüchen 10-17 angegeben.

Gemäß der Zeichnung wird ein Ausführungsbeispiel des Fahrzeugsteuersystems für ein Transportsystem und das in dem Fahrzeugsteuersystem ablauffähige Verfahren aufgezeigt. Es zeigt die
- FIG 1: ein Transportsystem mit einer Steuereinheit, einem Fahrzeug und Fahrzeugsegmenten,
- FIG 2: Signalverläufe des Wechselsignals, Schaltstellungen der Schaltmittel und Spannungsverläufe,
- FIG 3: eine Gruppenbildung von Fahrsegmenten.

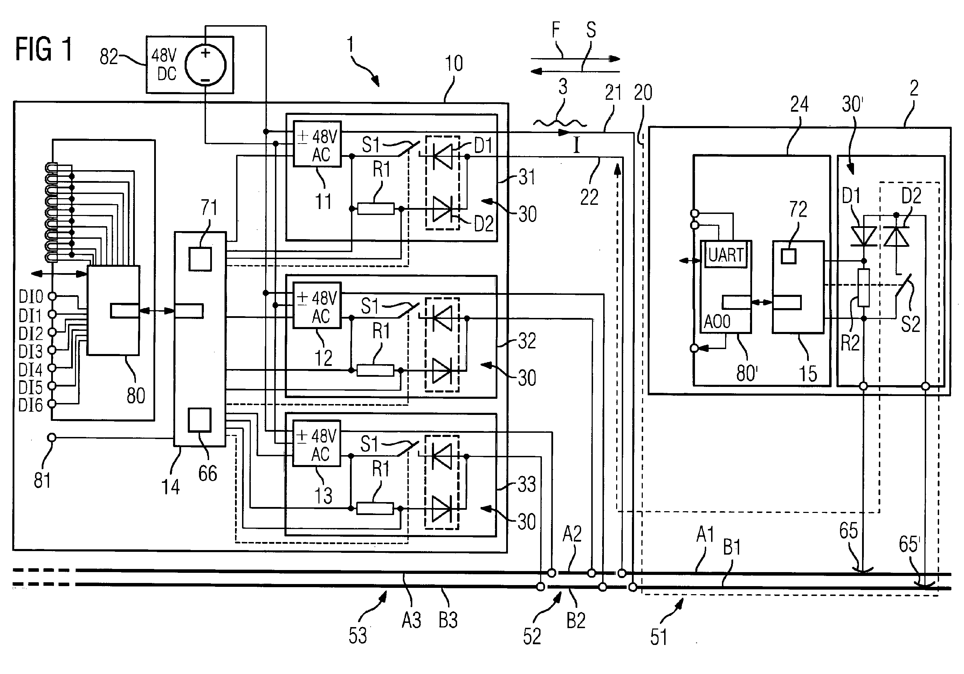

FIG 1 zeigt ein Transportsystem 1 am Beispiel einer Elektrohängebahn. Ein Fahrzeugsteuersystem zum Datenaustausch in dem Transportsystem 1 weist eine Steuereinheit 10 und ein Fahrzeug 2 auf, wobei die Steuereinheit 10 über eine erste Datenleitung 21 und eine zweite Datenleitung 22 miteinander Steuerbefehle F und Statusmeldungen S austauschen können.

Die Darstellung des Transportsystems 1 beschränkt sich auf einen Ausschnitt aus einem Gesamttransportsystem, wobei für das dargestellte Transportsystem 1 ein erstes Fahrsegment 51, ein zweites Fahrsegment 52 und ein drittes Fahrsegment 53 mit der Steuereinheit 10 in Verbindung steht. Für jedes der drei Fahrsegmente 51,52,53 steht je ein erstes Leistungsteil 31, ein zweites Leistungsteil 32 bzw. ein drittes Leistungsteil 33 zur Verfügung.

Die prinzipielle Funktion der Datenübertragung wird am Beispiel des ersten Fahrsegmentes 51, welches über die erste Datenleitung 21 und die zweite Datenleitung 22 mit dem ersten Leistungsteil 31 in Verbindung steht, beschrieben. Das erste Leistungsteil 31 weist einen ersten Signalgenerator 11 auf, welcher wiederum von einer Spannungsquelle 82 mit einer Spannung von beispielsweise 48 Volt Gleichspannung versorgt wird. Mit Hilfe der Spannungsquelle 82 erzeugt der erste Signalgenerator 11 beispielsweise eine Spannung mit einer Amplitude von +/- 48 Volt und einer Frequenz von beispielsweise 200 Hz. Demnach steht ein Wechselsignal 3 für eine zukünftige Datenübertragung von Steuerbefehlen F zu dem Fahrzeug 2 bereit.

Ausgehend von dem ersten Signalgenerator 11 kann ein durch die Wechselspannung hervorgerufener Strom I über die erste Datenleitung 21 an eine zweite Stromschiene B1 des ersten Fahrsegmentes 51 fließen, von da aus fließt der Strom I über die zweite Stromschiene B1 zu einem zweiten Stromabnehmer 65', und von dem zweiten Stromabnehmer 65' kann der Strom I zu dem in dem Fahrzeug 2 angeordnete zweiten Entkopplungsmittel 30' fließen.

Das zweite Entkopplungsmittel 30' ist als ein Dioden-Entkopplungsmittel ausgestaltet. Da mit dem ausgesendeten Wechselsignal 3 zunächst die positive Halbwelle des Wechselsignals 3 unterwegs ist, kann der Strom I über die Anode der ersten Diode D1 des zweiten Entkopplungsmittels 30' über das zweite Auswertemittel R2 fließen, wobei an dem zweiten Auswertemittel R2 aufgrund des Stromflusses ein Spannungsabfall hervorgerufen wird.

Den Stromfluss des Stromes I weiter fortführend fließt der Strom I aus dem zweiten Auswertemittel R2 hinaus und auf einen ersten Stromabnehmer 65, wodurch er in der ersten Stromschiene A1 des ersten Fahrsegmentes 51 fließen kann. Von hier aus fließt er die erste Stromschiene A1 entlang bis zu einem Anschlusspunkt der zweiten Datenleitung 22. Die zweite Datenleitung 22 verbindet ein Ende der ersten Stromschiene A1 mit dem ersten Leistungsteil 31 der Steuereinheit 10. Durch den beschriebenen Strompfad entsteht ein Stromkreis 20, welcher in der Figur 1 als gestrichelte Linie dargestellt ist.

Innerhalb des ersten Leistungsteils 31 ist ein erstes Entkopplungsmittel 30 angeordnet. An das erste Entkopplungsmittel 30 ist die zweite Datenleitung 22 angeschlossen, welche den mit dem Wechselsignal ausgesendeten Strom I wieder entgegennimmt.

In dem ersten Leistungsteil 31 ist ein erstes Schaltmittel S1 zur Veränderung der positiven Halbwelle des Wechselsignals 3 angeordnet. Bevor der von dem ersten Signalgenerator 11 mit der positiven Halbwelle getriebene Strom I zu dem ersten Signalgenerator 11 zurückkehren kann, muss er über das erste Schaltmittel S1 gelangen, wobei über das erste Entkopplungsmittel 30 des ersten Leistungsteils 31 aufgrund der ersten Diode D1 nur die positiven Halbwellen über das erste Schaltmittel S1 geführt werden können.

Das erste Schaltmittel S1 ist über eine gestrichelte Wirklinie mit einer ersten Recheneinheit 14 verbunden. Die erste Recheneinheit 14 ist dabei derart ausgestaltet bzw. weist ein entsprechendes Steuerprogramm auf um das erste Schaltmittel S1 derart zu schalten, dass das erste Schaltmittel S1 den Stromkreis 20 derart öffnet und wieder schließt, dass dem Wechselsignal 3 durch das Schalten des ersten Schaltmittels S1 die Binärwerte für einen Steuerbefehl F aufgeprägt werden, in dem sie je nach Informationsbit eine Halbwelle unterdrücken oder durchlassen. Da der Stromfluss nun in dem Stromkreis 20 durch das erste Schaltmittel S1 unterbrochen wird, kann an dem zweiten Auswertemittel R2 nur eine Spannung abfallen wenn das erste Schaltmittel S1 geschlossen ist. Dabei wird mit Hilfe des zweiten Entkopplungsmittels 30' in dem Fahrzeug 2 die positive Halbwelle dem zweiten Auswertemittel R2 zugeführt und dadurch können die Steuerbefehle F bzw. die in den Steuerbefehlen F enthaltenen Binärwerte seriell detektiert werden.

Für über das erste Schaltmittel S1 derart "gemorste" Binärwerte ist das zweite Auswertemittel R2 in dem Fahrzeug 2 mit einer zweiten Recheneinheit 15 verbunden. Dabei ist das zweite Auswertemittel R2 als ein in dem Stromkreis 20 liegender Längswiderstand ausgestaltet, über welchem ein Spannungsabfall messbar ist. In der zweiten Recheneinheit 15 ist ein Analog-Digital-Wandler integriert, welcher diesen messbaren Spannungsabfall auswertet.

Durch das in dem Fahrzeug 2 angeordnete zweite Entkopplungsmittel 30' können somit nur die von dem ersten Signalgenerator 11 ausgesendeten positiven Halbwellen einen Spannungsabfall an dem Längswiderstand hervorrufen und das nur wenn der Schalter des ersten Schaltmittels S1 geschlossen ist. Dieser beschriebene Stromweg über die erste Diode D1 des zweiten Entkopplungsmittels 30' entspricht einem Hinkanal für die Übertragung von Steuerbefehlen F.

Aufbauend auf den gezeigten Stromfluss für die positiven Halbwellen und somit für den Hinkanal wird anschließend der Stromfluss für die negativen Halbwellen und somit für den Rück-Kanal aufgezeigt.

Für das serielle Datenübertragungsverfahren wird jetzt die negative Halbwelle des Wechselsignals 3 über den Weg der ersten Datenleitung 21, der zweiten Stromschiene B1, dem zweiten Stromabnehmer 65' und dem zweiten Entkopplungsmittel 30' des Fahrzeuges 2 gezeigt. Da nun die negative Halbwelle an dem zweiten Entkopplungsmittel 30' anliegt, kann der durch die negative Halbwelle hervorgerufene Strom I über die Kathode der Diode D2 des zweiten Entkopplungsmittels 30' über das zweite Schaltmittel S2 (wenn dieses geschlossen ist) über den ersten Stromabnehmer 65 zurück auf die erste Stromschiene A1 fließen und damit über die zweite Datenleitung 22 zurück zu dem ersten Leistungsteil 31 und wiederum über die Kathode der Diode D2 des ersten Entkopplungsmittels 30 zurück an dem ersten Signalgenerator 11. Der durch die negative Halbwelle hervorgerufene Strom I erzeugt analog zu dem zweiten Auswertemittel R2 in dem Fahrzeug 2 an einem ersten Auswertemittel R1 in dem ersten Leistungsteil 31 einen Spannungsabfall, da das erste Auswertemittel R1 ebenfalls als ein in dem Strompfad liegender Längswiderstand ausgestaltet ist. Dieser Längswiderstand steht wiederum mit der ersten Recheneinheit 14 der Steuereinheit 10 in Verbindung und somit kann der Spannungsabfall an dem Längswiderstand gemessen werden. In diesem Falle sorgt das zweite Schaltmittel S2 für ein Schließen des aufgezeigten Stromkreises 20 bzw. für ein Öffnen des aufgezeigten Stromkreises 20 und kann dadurch Binärwerte als eine Statusmeldung S seriell an die Steuereinheit 10 in dem Rückkanal übertragen.

Dieser Datenaustausch der seriellen Binärwerte für die Steuerbefehle F und der seriellen Binärwerte für die Statusmeldungen S findet nun nahezu gleichzeitig statt oder sozusagen in einem Zeitmultiplexverfahren.

Das zweite Leistungsteil 32 weist ebenfalls einen zweiten Signalgenerator 12 auf, welcher das Wechselsignal für das zweite Fahrsegment 52 bereitstellt. Das dritte Leistungsteil 33 weist einen dritten Signalgenerator 13 auf, welcher ein Wechselsignal zur Datenübertragung für das dritte Fahrsegment 53 bereitstellt.

Da die erste Recheneinheit 14 ein Synchronisationsmittel 66 aufweist, werden die Signalgeneratoren 11,12,13 für die Fahrsegmente 51,52,53, welche eine Gruppe bilden, automatisch gemeinsam synchronisiert.

Über eine Schnittstelle ist die erste Recheneinheit 14 mit einem ersten Interfaceschaltkreis 80 verbunden. Der erste Interfaceschaltkreis 80 dient dem Anschluss an eine speicherprogrammierbare Steuerung und kann zusätzlich Digitalausgänge DIO bis DI6 ansteuern. Weiterhin weist die erste Recheneinheit 14 einen Synchronisationsanschluss 81 auf. Der Synchronisationsanschluss 81 dient dazu diese Steuereinheit 10 mit weiteren Steuereinheiten, welche zu einer Gruppe zusammengeschaltet sind, zu synchronisieren.

Auch das Fahrzeug 2 weist einen zweiten Interface-Schaltkreis 80' auf, welcher mit der zweiten Recheneinheit 15 über eine Schnittstellenverbindung verbunden ist. Der zweite InterfaceSchaltkreis 80' dient wiederum der Anschaltung an eine speicherprogrammierbare Steuerung, welche in dem Fahrzeug 2 angeordnet ist.

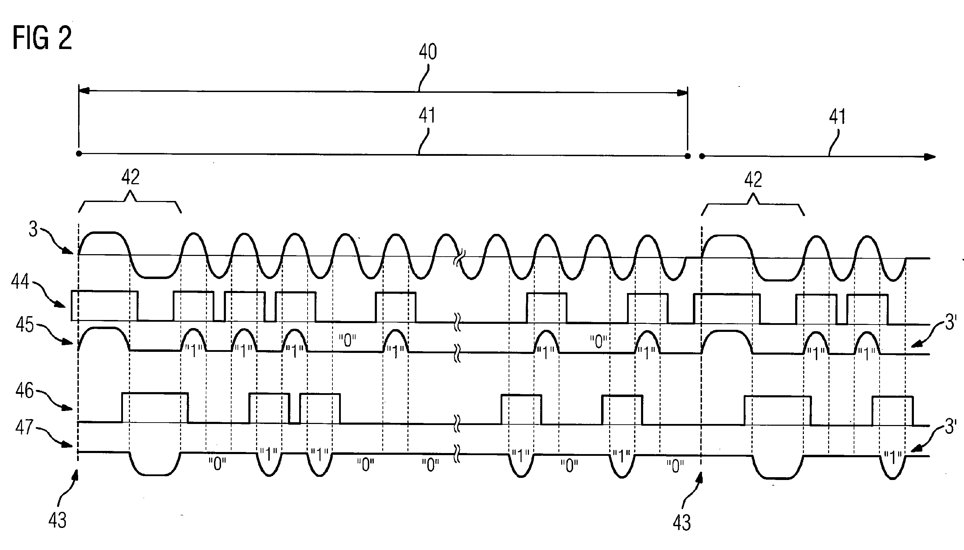

Gemäß FIG 2 ist der zeitliche Verlauf des Wechselsignals 3, welcher beispielsweise vom ersten Signalgenerator 11 erzeugt wird, ein zeitlicher Verlauf 44 der Schaltstellung des ersten Schaltmittels S1, ein Spannungsverlauf 45 am zweiten Auswertemittel R2, ein zeitlicher Verlauf 46 der Schaltstellung des zweiten Schaltmittels S2 und ein Spannungsverlauf 47 am ersten Auswertemittel R1 dargestellt. Die Spannungsverläufe 45, 47 entsprechen dem jeweils veränderten Wechselsignal 3'.

Das Wechselsignal 3 wird für eine zeitlich begrenzte Dauer 40 ausgesendet, diese zeitlich begrenzte Dauer 40 entspricht einem Telegrammpaket 41. Die Bereitstellung des Telegrammpaketes 41 wird zyklisch wiederholt. Ausgehend von einem links in der Zeichnung dargestellten Startpunkt 43 weist das Wechselsignal 3 ein Kennungs-Signal 42 auf, welches sich in seiner Frequenz und Kurvenform von der Amplitude des eigentlichen Trägersignals des Wechselsignals 3 unterscheidet und dadurch den Startpunkt 43 des Telegrammpaketes 41 kennzeichnet.

Die Programmsteuerung in der ersten Recheneinheit 14 ist derart ausgestaltet, dass sie bei einer Signalflanke am Synchronisationsanschluss 81 über das Synchronisationsmittel 66 das Kennungssignal 42 erzeugt und das erste Schaltmittel S1 zur sicheren Erkennung des Kennungssignals 42 für zumindest die positive Halbwelle des Kennungssignals 42 geschlossen hält. Auf die negative Halbwelle des Kennungssignals 42 folgen drei positive Halbwellen des Wechselsignals 3, welche jeweils den Binärwert "1" eines Steuerbefehls F repräsentieren. Da für die vierte positive Halbwelle nach dem Kennungssignals 42 des Wechselsignals 3 das erste Schaltmittel S1 derart gesteuert ist, dass der Schalter nicht geschlossen ist, also geöffnet ist, kann sich die positive Halbwelle nicht als ein Spannungsabfall am zweiten Auswertemittel R2 bemerkbar machen und somit wird der Binärwert "0" repräsentiert. Mit dem Schließen des Schalters des ersten Schaltmittels S1 wird der Binärwert "1" und mit dem Öffnen des ersten Schaltmittels S1 wird der Binärwert "0" übertragen. Die serielle Übertragung der Binärwerte "1" oder "0" ergibt beispielsweise ein 16-Bit langes Datenmuster für einen Steuerbefehl F.

Für die Übertragung von Statusbefehlen S ergibt sich mit dem Spannungsverlauf 47 am ersten Auswertemittel R1 eine ähnliche binäre Datenübertragung, allerdings wird nun die negative Halbwelle des Wechselsignals 3 ausgewertet. Bei der Auswertung von positiven Halbwellen und negativen Halbwellen arbeiten das erste Entkopplungsmittel 30 mit dem zweiten Schaltmittel S2 und das zweite Entkopplungsmittel 30' mit dem ersten Schaltmittel S1 zusammen. Kennzeichnend für das Verfahren ist, dass ständig je Halbwelle die Schaltmittel und die Auswertemittel in den unterschiedlichen Orten, nämlich zum Einen in der Steuereinheit und zum Anderen in dem Fahrzeug, wechselseitig aktiviert werden. Der Signalgenerator verbleibt jedoch immer an dem Ort in der Steuereinheit.

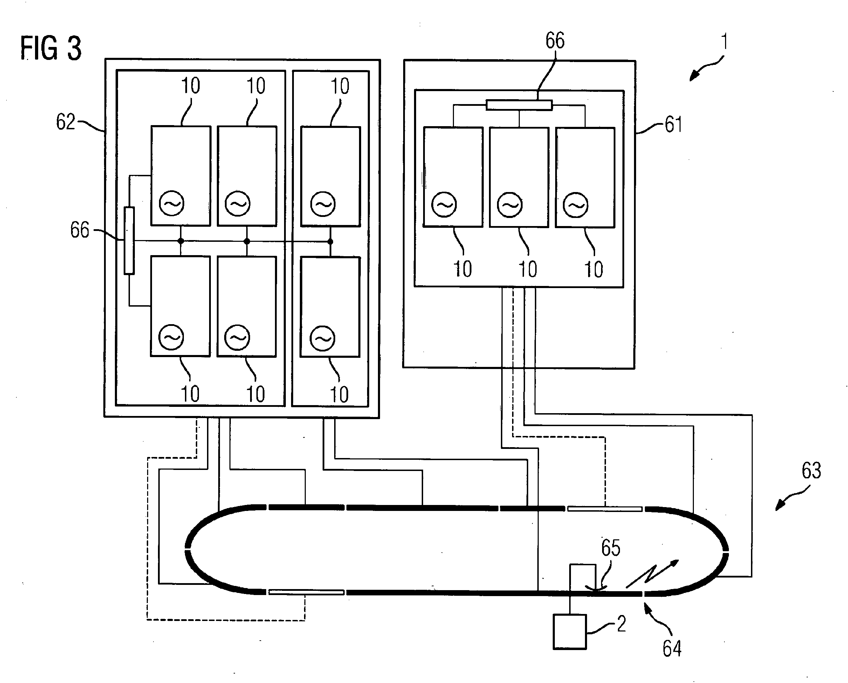

Gemäß FIG 3 ist eine erste Gruppe 61 und eine zweite Gruppe 62 eines Transportsystems 1 dargestellt. Die erste Gruppe 61 weist drei Segmente mit jeweils einer zugeordneten Steuereinheit 10 auf. Die drei Steuereinheiten 10 sind über das Synchronisationsmittel 66 und entsprechenden Synchronisationsleitungen miteinander synchronisiert.

Die zweite Gruppe 62 weist sechs Segmente auf, wobei die sechs Segmente ebenfalls sechs Steuereinheiten 10 aufweisen, mit jeweils einem zugeordneten Signalgenerator, wobei die Steuereinheiten bzw. die Signalgeneratoren über ebenfalls ein Synchronisationsmittel 66 und entsprechende Synchronisationsleitungen miteinander synchronisiert sind. Da im Beispiel einer Elektrohängebahn das Fahrzeug 2 über zumindest einem ersten Stromabnehmer 65 auf einer Stromschiene für die Kommunikation von Segment zu Segment gleitet, kann es an einer Kurzschlussstelle 64, welche einen Übergang von einem Segment zu einem anderen Segment bildet aufgrund des Stromabnehmers 65 zu einem Kurzschluss zwischen diesen beiden Segmenten kommen.

Der Kurzschluss könnte eine Störung in der Kommunikation hervorrufen. Diese Störung wird aufgrund eines ersten Fehlererkennungsmittels 71 in der Steuereinheit 10 (siehe FIG 1) und eines zweiten Fehlererkennungsmittels 72 in dem Fahrzeug 2 (siehe FIG 1) erkannt und als fehlerhaft verworfen. Da die beiden Segmente hinsichtlich der Datenübertragung synchronisiert sind, kann eine erneute Datenübertragung erfolgen, wobei das Fahrzeug 2 bereits über die Kurzschlussstelle 64 hinweggefahren ist und keine weitere Störung zu erwarten ist. Der Rückkanal ist jedoch infolge der Synchronisation und der Entkopplungsmittel 30 und 30' immer funktionstüchtig unabhängig vom Hinkanal.

Weitere für die vorliegende Erfindung relevante Details und technische Merkmale sind folgende:
Automatisierte Elektrohängebahnen bzw. Fördertechnik-Anlagen wie sie z.B. in der Automobilindustrie Verwendung finden, bestehen aus einer individuell verschiedenen Anzahl an Transport- bzw. Fahrwagen, die von einer zentralen Steuerung aus kontrolliert werden. Üblicherweise ist die Transportbahn ein Schienensystem, welches in Segmentabschnitte unterteilt ist. Auf einem Segment können sich beliebig viele Transportwagen befinden, die Anzahl ist oft mechanisch und logistisch beschränkt. Damit das Verhalten und somit die Fahrprofile der Transportwagen innerhalb der Produktionsanlage den unterschiedlichen Fertigungsprozessen angepasst werden kann, ist eine Kommunikation zwischen der zentralen Anlagensteuerung und den Transportwagen notwendig. Weiterhin ist es für die zentrale Steuerung wichtig, über das Verhalten der Transportwagen in Echtzeit informiert zu sein. Dabei ist zu beachten, dass die zu überbrückenden Distanzen durchaus 1000 Meter und mehr betragen können. Eine Störsicherheit muss entsprechend dem industriellen Umfeld bemessen sein. Eine Kontaktsicherheit der Schleifkontakte bzw. Stromabnehmer muss auch bei Verschmutzung ein sicheres Kommunikationsverhalten gewährleisten. Auch bei Segmentübergängen muss ein sicheres Kommunikationsverhalten gewährleistet sein, denn hierbei kann es zu den bereits erwähnten Kurzschlüssen zwischen den Segmenten kommen, falls sich gerade dann ein Transportwagen dort befindet wenn ein Steuerbefehl bzw. eine Statusmeldung abgesetzt wird.

Es muss zu jedem Zeitpunkt sichergestellt werden, dass bei Störungen ohne nennenswerten Informationsverlust die Kommunikation wieder aufgesetzt werden kann. Diese Sicherstellung wird vorzugsweise durch die Synchronisation gewährleistet.

Um einen Datenaustausch zwischen einer zentral oder dezentral aufgebauten Anlage und den auf dem segmentierten Schienensystem beweglichen Transportwagen zu erreichen, kommen üblicherweise speicherprogrammierbare Segment- und Transportwagen-Steuerungen zum Einsatz. Die Segmentsteuerungen sind anlagenseitig fest montiert und senden über einen Kommunikationskanal (meist elektrisch leitende Schienen mit Schleifkontakten an den Transportwagen) Produktivdaten wie z.B. die Fahrgeschwindigkeit an die Transportwagen. Die Transportwagen-Steuerungen wiederum übertragen individuelle Daten wie z.B. Verhaltens- oder Fehlerinformationen an die Segmentsteuerungen.

Unter einer zentral aufgebauten Anlage ist ein zentrales Automatisierungssystem für das Transportsystem zu verstehen, unter dezentral aufgebauter Anlage ist ein verteiltes Automatisierungssystem zu verstehen.

Die Segmente können so montiert werden, dass beim Überfahren der Segmentgrenzen bzw. -Verbindungen durch die Transportwagen-Schleifstücke Kurzschlüsse zwischen den Informationsleitungen der benachbarten Segmente entstehen dürfen.

Auch könnten spezielle Datenaustauschsegmente vorgesehen werden, in denen in diesem Fall eine klare Peer-to-Peer-Kommunikation erfolgen kann. In diesem Segment sollte sich dann nur ein Transportwagen befinden. Die Ankopplung dieser Datenaustausch-Segmente zu den benachbarten Segmenten erfolgt mit Informationsleitungs-Isolierstücken, die sicher die Schleifkontaktlänge isolieren müssen. Diese Isolation ist nicht elektrisch gemeint, sondern nur "logisch" - es werden in diesen Segmenten weiterhin Fehlermeldungen übertragen, lediglich neue Steuer- oder Datenübertragungsinformationen in Richtung Fahrzeug können dort nicht übertragen werden. In diesem Fall erfolgt nur die Übertragung des Startbits (Idle-Mode).

Die Elektro-Hängebahn-Anlage kann entweder zentral oder dezentral aufgebaut sein, wobei letztere den Vorteil kürzerer störungsärmerer Verdrahtungswege zu den Segmenten hat.

Die Informationsübertragung (Hin- und Rückkanal) erfolgt vorzugsweise durch einen Broadcast, also unadressiert. Es können mit dem beschriebenen Verfahren aber sowohl "gemeinsam unquittierte" als auch "gemeinsam quittierte" Datentelegramme übertragen werden:
"Gemeinsam unquittiert" sind in der Regel die so genannte Steuerbefehle oder einfache Parametrierungen, die keiner expliziten Quittung bedürfen, sondern als Feedback nur eine einfache Status- bzw. Sammelfehlermeldung enthalten.

"Gemeinsam quittiert" ist, wenn auf jeden Request genau eine Response erfolgt. Beide sowohl Request als auch Response laufen aber im Broadcast-Verfahren ab. Es kann also eine Datenübertragung z.B. zum Zweck einer Parametrierung von den Segmentsteuerungen in alle Transportwagen als Broadcast erfolgen. Von allen Transportwagen wird diese Übertragung gemeinsam quittiert.

Sollte jedoch eine definierte Datenübertragung (Request - Response) von einem Segment in einen Transportwagen oder/und zurück durchgeführt werden (z.B. gezielte Parametrierung, Fehlerhistorie), so ist dies in dem vorher beschriebenen Datenaustauschsegment durchzuführen.

Es ist auch vorstellbar, eine Datenübertragung zum Zweck eines Firmware-Updates von den Segmentsteuerungen in alle Transportwagen ebenfalls als Broadcast durchzuführen. Von allen Transportwagen wird diese Übertragung ebenfalls gemeinsam quittiert. Da hierbei in der Regel kein Produktivbetrieb erfolgen darf, wäre eine evtl. notwendige Fehlerbehandlung durch Telegrammwiederholung unkritisch.

Das Verfahren erlaubt es, unquittierte mit quittierten Übertragungen zu mischen, also so genannte Steuerbefehle mit expliziten Datenübertragungsbefehlen. Um diese Quittungsnotwendigkeit zu unterscheiden, werden zusätzliche Kennungs-Informationen den Übertragungs-Telegrammen zugefügt.

Damit Informationsleitungs-Kurzschlüsse benachbarter Segmente bei geringstem Kommunikationsverlust toleriert werden können, sind alle Segmentsteuerungen innerhalb einer Gruppe zu synchronisieren.

Eine Gruppe sollte z.B. ein Schaltschrank oder eine Schaltschrank-Gruppe mit einer entsprechenden Anzahl von Segmentsteuerungen oder Steuereinheiten sein. Innerhalb einer Gruppe erfolgen alle Datenübertragungen synchronisiert. Das hat den Vorteil, dass bei Segment-Kurzschlüssen durch die Wagen die Kommunikation nicht grundsätzlich durch Überlagerungen gestört wird. Zwischen den beschrieben Gruppen wird dasselbe logische Isolierstück angebracht, welches bereis vorher für die Abtrennung der Einzelsegmente beschrieben worden ist. Dieses Isolierstück kann auch durch eine sensorgesteuerte Umschaltung (Wagen fährt aus der alten Gruppe aus - Wagen fährt in die neue Gruppe ein) realisiert werden, wobei das umgeschaltete Segment je nach Erfordernis von einer Gruppe 1 oder von einer Gruppe 2 versorgt werden würde.

Das erfindungsgemäße Datenübertragungsverfahren gestattet damit eine Informationsüberlagerung (Dominanz, keine Arbitrierung notwendig) insbesondere für den Rückkanal vom Transportwagen zum Segment. Beim Hinkanal werden bei gleichen Informationen benachbarter Segmente ebenfalls keine Schwierigkeiten auftreten, sollten jedoch die Informationen unterschiedlich sein, so wird dies durch den Informations-Sicherungsmechanismus erkannt und der Transportwagen für den kurzen Zeitpunkt des Kurzschlusses keine aktuellen Informationen erhalten können (der Rückkanal ist jedoch - siehe oben - hierbei gewährleistet, da wichtige Informationen dominant übertragen werden).

Unter der Dominanz ist hier im Fall einer Informationsüberlagerung zu verstehen, dass eine Information dominiert, die mit einer geschalteten Halbwelle arbeitet, gegenüber einer Information, die mit einer nicht geschalteten Halbwelle arbeitet.

Die Dominanz bedeutet im Falle eines Kurzschlusses zwischen mehreren Segmenten eine Verfälschung der Steuerbefehle (HinKanal). Dies wird durch die Prüfsumme erkannt.

Die Dominanz bedeutet im Falle des Vorhandenseins mehrerer Fahrzeuge in einem Segment eine Überlagerung der Statusmeldungen. Statusmeldungen sollten mit solchen dominanten Informationen versehen werden. Somit können Fehlermeldungen immer ausgewertet werden.

Es erfolgt eine oberwellenarme Basisband-Datenübertragung mit ausreichender Performance für eine große Bandbreite von Transportaufgaben:
Das Trägersignal wird von je einem Generator aus für jedes Segment bereitgestellt. Dieser Generator erzeugt kein kontinuierliches Signal, sondern permanent Frames ("Bursts") von jeweils genau einer definierten Länge. Der Generator wird durch eine PWM mit nachgeschaltetem LC-Filter repräsentiert,
der durch die DSP-Steuerung damit eine frei programmierbare Hüllkurve erzeugen kann. Die PWM-Schaltfrequenz ist gegebenenfalls auch wobbelbar, damit können Resonanzeffekte weitestgehend vermieden werden.

Die Datenübertragung erfolgt im Multiplex-Verfahren (Hin- und Rückkanal zeitmultiplex verschachtelt - durch positive und negative Halbwelleninformation jedoch voneinander getrennt, siehe FIG 2.

### Hin-Kanal: Positive Halbwelle

Es erfolgt eine niederohmige Speisung des Schienensegments mit der positive Halbwelle, der Arbeitswiderstand R2 befindet sich im Transportwagen, somit "nimmt" sich jeder Transportwagen genau den Strom, der durch diesen Widerstand R2 und die vom Segment angelegte Spannung bestimmt wird. Damit ist der physikalisch notwendige Mindest-Stromfluss (ca. 10mA) für jeden Transportwagen für jede Halbwelle der Hin-Richtung garantiert, um einen "Putz"-Vorgang des Schienensystems zu gewährleisten. Ein Spannungsdurchschlag durch mögliche Schmutz- und Oxidschichten auf dem Schienensystem nennt man "Putz"-Vorgang.

### Rück-Kanal: Negative Halbwelle

Es wird vom Segment allen Transportwagen die negative Halbwelle angeboten, der Arbeitswiderstand R1 befindet sich im Gegensatz zu dem Hinkanal im Segment. Jeder Transportwagen synchronisiert sich auf das Start-Kennungs-Signal und legt danach seine Rückkanal-Informationen seriell auf das Schienensystem des Segments. Die Aufsynchronisierung geschieht durch fortwährendes Abtasten des Segment-Sendesignals mittels A/D-Wandler nebst geeigneter Filterung im Transportwagen. Vorzugsweise werden alle Filter digital im Signalprozessor realisiert, eine Vorfilterung gegen Spikes erfolgt jedoch analog.

Durch die Dioden-Entkopplung von Hin- und Rückkanal ist eine problemlose Ansteuerung der Schalter nach oben genannter "grob" erfolgter Aufsynchronisierung möglich, welche bereits weit vor bzw. nach dem Nulldurchgang erfolgen kann bzw. sollte, siehe FIG 2. Damit wird immer die gesamte positive bzw. negative Halbwelle zur Signalübertragung genutzt.

Eine Differential-Übertragung über eine Vollbrücke (positive und negative Spannungen auf dem Schienensystem) erlaubt durch ihre symmetrischen Pegelverhältnisse eine störarme Datenübermittlung. Sie ist resistenter gegenüber symmetrischen kapazitiven oder induktiven Einkopplungen in die Kabel von der Segmentsteuerung zu den jeweiligen Segmenten, wobei hierbei zusätzlich der Vorteil der dezentralen Technik mit ihren vergleichsweise kurzen Verdrahtungswegen zur Geltung kommt.

Eine LC Filterung erlaubt eine Einbeziehung der an sich schädlichen Kabel-Impedanz (vorwiegend kapazitiv im Rahmen der üblichen Kabellängen und -Typen) als nützliches Schwingkreis-Element und dessen notwendige Dämpfung. Durch eine geeignete Auslegung der Bauelemente ist es möglich (C sollte etwa 10 x so groß wie die maximal zu erwartende Kabelkapazität sein, siehe Abbildung 14), Kabellängen-Einflüsse weitestgehend zu ignorieren und somit auf Abgleiche der Anlage zu verzichten. Die LC-Filterung ist mit der Resonanzfrequenz hinreichend genau auf die PWM-Modulationsfrequenz abgestimmt, so dass störende Oberwellen der Hüllkurve auf den Schleifleitungen vermieden werden. Umladevorgänge durch den kapazitiven Anteil der Kabel werden also in die Dimensionierung einbezogen und verursachen somit keine zusätzlichen Verluste in der PWM-Stufe. Die PWM-Verluste sind auf die normalen Umschaltverluste einer jeden Brückenschaltung reduziert.

Es erfolgt eine bewusste Trennung zwischen Generierung des Basis-Datenübertragungs-Frames und der eigentlichen Modulation (Informations-Aufprägung des Nutzsignals), nur diese Trennung erlaubt eine einfache Informationsüberlagerung d.h. bei eventuellen Kurzschlüssen zwischen Segmenten dominieren immer die 1-Informations- Bits über die 0-Informations-Bits. Das gilt sowohl für den Hin- als auch für den Rück-Kanal. Die durch dieses Verfahren geschaffenen klaren Verhältnisse bei Überlagerungen gestatten z.B. bei der Rückkanal-Übertragung eine vernünftige Fehler-Dominanz. Falls es zu einer solchen Fehler-Überlagerung kommt, so ist die in jedem Transportwagen generierte Prüfsumme zwecks Informations-Sicherung von der Segmentsteuerung zu verwerfen, und der Dominanz der Fehlermeldungen Augenmerk zu schenken.

Durch die klare Dominanz ist es möglich, für den Rückkanal, der üblicherweise die Status- und Fehlermeldungen enthält, einen Sammelfehler zu melden, der auch einen Totalausfall eines Transportwagens signalisieren kann. Dazu kann ein Relais verwendet werden, welches mit seinem Ruhekontakt das zweite Schaltmittel S2 überbrückt. Dieses Relais wird in dem Moment angesteuert, in welchem der Controller des Transportwagens feststellt, dass alle Bedingungen für seine ordnungsgemäße Funktion erfüllt sind. Ist diese Bedingung nicht erfüllt, was z.B. auch beim Totalausfall des Antriebes inklusive Motorschutzschalter der Fall sein kann, so wird dadurch ein dauerndes Ansteuern des Rückkanals der Fall sein, was der Segmentsteuerung signalisiert, dass das betreffende Segment gravierend gestört ist.

Es wird eine möglichst hohe Spannung wegen der Übertragungssicherheit benötigt, der dazu gehörende Strom sollte auch so hoch wie nötig gewählt werden, um den Stromfluss auch durch Verschmutzungs- und Oxidschichten der Übertragungsschienen hindurch aufrechtzuerhalten. Hierbei ist es also notwendig, eine Balance zwischen Übertragungssicherheit und Verlustleistung zu realisieren.

Die Längswiderstände oder Arbeitswiderstände R1,R2 für Hinund Rückrichtung können getrennt einstellbar sein (je nach maximaler Transportwagen-Anzahl auf einem oder mehreren benachbarten Segmenten)

So genannte Schwebespannungen (kapazitive Überkopplungen der Versorgungsleitungen für den Antrieb auf die Informationsleitungen) werden in Folge der relativen Niederohmigkeit minimiert.

Die Übertragung von Broadcast-Informationen erfolgt im Zeitmultiplexverfahren im Basisband.

Die Übertragung von Daten im Hin- und Rückkanal erfolgt mit sehr oberwellenarmen Signalen. Das erlaubt Störungsarmut auch über große räumliche Distanzen bei angemessener Performance.

Die Synchronisation bezogen auf eine Gruppe erspart aufwändige Synchronisation über mehrere Schaltschränke hinweg und damit über große Entfernungen - damit entfallen die Probleme einer störungsresistenten Echtzeit-Synchronimpuls-Übertragung. Innerhalb eines Schaltschrankes dagegen ist dies gut mit Standardtechnik beherrschbar. Mit dem Synchronisationsverfahren ist jedoch möglich über Schaltschränke hinweg zu synchronisieren und damit die gesamte Anlage als eine Gruppe zu betrachten.

Das Verfahren erlaubt durch Trennung des Signalgenerators vom Modulator eine definierte Signalüberlagerung für Hin- und Rückkanal bei synchronisierter Übertragung.

Durch Einführung von lokalen Signalgeneratoren je Segment ist eine hohe Fehlertoleranz der gesamten Anlage möglich, denn der Ausfall von Einzelsegmenten zieht nicht automatisch den Ausfall der gesamten Anlage nach sich. Damit können im Havariefall alle nicht gestörten Wagen geordnet verfahren werden.

Das Verfahren erlaubt eine Signalübertragung durch eine frei programmierbare Hüllkurve sowie einer variablen Hüllkurvenfrequenz (Trägerfrequenz für den Frame/Burst). Das Wort Trägerfrequenz definiert man hier mit ausgenommenem Startimpuls.

Eine von der Funktionalität der Elektronik des Transportwagens unabhängige Sammelfehlermeldung für den Rück-Kanal mittels Relais oder anderweitigen elektrischen, elektromechanischen oder elektronischen Schaltelementen ist möglich, ohne die Übertragung vom Segment zu den noch intakten Transportwagen für den Hin-Kanal zu beeinträchtigen.

Eine Wiederaufsetzbarkeit nach Datenübertragungsstörungen ist durch eindeutige Start-Kennung im Frame gut gegeben. Damit entfällt die Notwendigkeit einer Erhöhung der Kanalkapazität "über Gebühr" nur wegen eventueller möglicher mehrfacher Fehlschläge der Re-Synchronisation.

Durch eine spezielle Kennung sind in einem Segment gemischte Befehlstypen nacheinander möglich (unquittierte und quittierte Befehle).

Verlustleistungen sind durch die Beschränkung auf unbedingt notwendige Pegel (ca. 40...50V mit Strömen von ca. 10mA) im Gegensatz zu Hochvolt-Techniken minimal und ermöglichen eine kompakte Bauweise.

## Patentansprüche

1. Verfahren zum Datenaustausch in einem Transportsystem (1), wobei
- Steuerbefehle (F) von einer Steuereinheit (10) über eine erste Datenleitung (21) zu einem Fahrzeug (2) und
- Statusmeldungen (S) von dem Fahrzeug (2) über eine zweite Datenleitung (22) zu der Steuereinheit (10) übertragen werden, wobei
- über einen Signalgenerator (11,12,13) ein Wechselsignal (3) bereitgestellt wird und das Wechselsignal (3) an der ersten Datenleitung (21) und der zweiten Datenleitung (22) angeschaltet wird, wobei
- das Wechselsignal(3)in seinem zeitlichen Verlauf verändert wird, um durch die Veränderungen die Steuerbefehle (F) und die Statusmeldungen (S) zu übertragen,
**dadurch gekennzeichnet, dass** in der
- Steuereinheit (10) ein erstes Schaltmittel (S1) zur Veränderung der positiven Halbwellen des Wechselsignals (3) und in dem
- Fahrzeug (2) ein zweites Schaltmittel (S2) zur Veränderung der negativen Halbwellen des Wechselsignals (3) in einem durch die erste und die zweite Datenleitung (21,22) gebildeten Stromkreis (20) derart betrieben werden, dass die Steuerbefehle (F) bzw. die Statusmeldungen (S) als Binärwerte zwischen der Steuereinheit (10) und dem Fahrzeug (2) und umgekehrt übermittelt werden, wobei der Datenaustausch der Steuerbefehle (F) und der Statusmeldungen (S) durch das veränderte Wechselsignal (3') durch die positive und die negative Halbwelle ineinander verschachtelt wird.

2. Verfahren nach Anspruch 1, wobei
- in der Steuereinheit (10) ein erstes Entkopplungsmittel (30) eingesetzt wird, um die negativen Halbwellen einem ersten Auswertemittel (R1) zuzuführen und dadurch die Statusmeldungen (S) zu detektieren und
- in dem Fahrzeug (2) ein zweites Entkopplungsmittel (30') eingesetzt wird, um die positiven Halbwellen einem zweiten Auswertemittel (R2) zuzuführen und dadurch die Steuerbefehle (F) zu detektieren.

3. Verfahren nach Anspruch 1 oder 2, wobei der Signalgenerator (11,12,13) so betrieben wird, dass er das Wechselsignal (3) für eine zeitlich begrenzte Dauer (40) als ein Telegrammpaket (41) bereitstellt und diese Bereitstellung des Telegrammpakets (41) zyklisch wiederholt wird.

4. Verfahren nach Anspruch 3, wobei jedes Telegrammpaket (41) mit einem anfänglichen Kennungs-Signal (42) versehen wird, welches sich in einer Frequenz, einer Kurvenform oder einer Amplitude von einem Trägersignal des Wechselsignals (3) unterscheidet, und dadurch ein Startpunkt (43) des Telegrammpaketes (41) gekennzeichnet wird.

5. Verfahren nach einem der Ansprüche 1 bis 4, wobei in dem Transportsystem (1) eine Mehrzahl von Fahrsegmenten (51,52, 53) als Transportwege für das Fahrzeug (2) verwendet wird, wobei jedem Fahrsegment (51,52,53) ein Signalgenerator (11, 12,13) zugeordnet wird.

6. Verfahren nach Anspruch 5, wobei in dem Transportsystem (1) ein Fahrsegment (51) oder eine Mehrzahl von Fahrsegmenten (51,52,53) jeweils eine Gruppe (61,62) bilden und die in den Gruppen (61,62) enthaltenen Signalgeneratoren (11,12,13) gemeinsam synchronisiert werden.

7. Verfahren nach einem der Ansprüche 1 bis 6, wobei für die Steuerbefehle (F) und für die Statusmeldungen (S) je eine Prüfsumme gebildet wird und ebenfalls übermittelt wird.

8. Verfahren nach einem der Ansprüche 5 bis 7, wobei mit der ersten Datenleitung (21) und der zweiten Datenleitung (22) ein Schleifleitungsnetzwerk (63) zwischen der Steuereinheit (10) und dem Fahrzeug (2) gebildet wird und im Falle einer Störung des Datenaustauschs in dem Schleifleitungsnetzwerk (63) diese Störung über einen Sicherungsmechanismus erkannt wird, insbesondere im Falle eines Kurzschlusses zwischen zwei Fahrsegmenten (51,52) hervorgerufen durch einen Stromabnehmer (65,65') des Fahrzeuges (2), welches von einem Fahrsegment (51) auf ein benachbartes Fahrsegment (52) fährt.

9. Fahrzeugsteuersystem zum Datenaustausch zwischen einer Steuereinheit und einem Fahrzeug in einem Transportsystem (1), wobei
- die Steuereinheit (10) ausgestaltet ist, Steuerbefehle (F) über eine erste Datenleitung (21) zu dem Fahrzeug (2) und
- das Fahrzeug (2) ausgestaltet ist, Statusmeldungen (S) über eine zweite Datenleitung (22) zu der Steuereinheit (10) zu übertragen, wobei
- ein Signalgenerator (11,12,13) an der ersten Datenleitung (21) und an der zweiten Datenleitung (22) angeschlossen ist und ein Wechselsignal (3) bereitstellt, das in seinem zeitlichen Verlauf verändert wird, um durch die Veränderungen die Steuerbefehle (F) und die Statusmeldungen (S) zu übertragen,
**dadurch gekennzeichnet, dass** in der
- Steuereinheit (10) ein erstes Schaltmittel (S1) zur Veränderung der positiven Halbwellen des Wechselsignals (3) und in dem
- Fahrzeug (2) ein zweites Schaltmittel (S2) zur Veränderung der negativen Halbwellen des Wechselsignals (3) in einem durch die erste und die zweite Datenleitung (21,22) gebildeten Stromkreis (20) angeordnet ist, um die Steuerbefehle (F) bzw. die Statusmeldungen (S) als Binärwerte zwischen der Steuereinheit (10) und dem Fahrzeug (2) und umgekehrt zu übermitteln, wobei der Datenaustausch der Steuerbefehle (F) und der Statusmeldungen (S) durch das veränderte Wechselsignal (3') durch die positive und die negative Halbwelle ineinander verschachtelt wird.

10. Fahrzeugsteuersystem nach Anspruch 9, wobei
- in der Steuereinheit (10) ein erstes Entkopplungsmittel (30) angeordnet ist, welches mit einem ersten Auswertemittel (R1) in Verbindung steht um dem ersten Auswertemittel (R1) die negativen Halbwellen zuzuführen und dadurch die Statusmeldungen (S) zu detektieren und
- in dem Fahrzeug (2) ein zweites Entkopplungsmittel (30') angeordnet ist, welches mit einem zweiten Auswertemittel (R2) in Verbindung steht um dem zweiten Auswertemittel (R2) die positiven Halbwellen zuzuführen und dadurch die Steuerbefehle (F) zu detektieren.

11. Fahrzeugsteuersystem nach Anspruch 9 oder 10, wobei der Signalgenerator (11,12,13) mit einer ersten in Verbindung steht und die erste Recheneinheit (14) ausgestaltet ist, das sie den Signalgenerator (11,12,13) so steuert, dass das Wechselsignal (3) für eine zeitlich begrenzte Dauer (40) als ein Telegrammpaket (41) bereitgestellt und diese Bereitstellung des Telegrammpakets (41) zyklisch wiederholt wird.

12. Fahrzeugsteuersystem nach Anspruch 11, wobei jedes Telegrammpaket (41) ein anfängliches Kennungs-Signal (42) aufweist, welches sich in einer Frequenz, einer Kurvenform oder einer Amplitude von einem Trägersignal des Wechselsignals (3) unterscheidet, und dadurch ein Startpunkt (43) des Telegrammpaketes (41) kennzeichnet.

13. Fahrzeugsteuersystem nach einem der Ansprüche 9 bis 12, wobei das Transportsystem (1) eine Mehrzahl von Fahrsegmenten (51,52,53) als Transportwege für das Fahrzeug (2) aufweist, wobei jedem Fahrsegment (51,52,53) ein Signalgenerator (11, 12,13) zugeordnet ist.

14. Fahrzeugsteuersystem nach Anspruch 13, wobei in dem Transportsystem (1) ein Fahrsegment (51) oder eine Mehrzahl von Fahrsegmenten (51,52,53) als eine Gruppe (61,62) ausgebildet ist und die in den Gruppen (61,62) enthaltenen Signalgeneratoren (11,12,13) ein gemeinsames Synchronisationsmittel (66) aufweisen.

15. Fahrzeugsteuersystem nach einem der Ansprüche 9 bis 14, wobei die Steuereinheit (10) ein erstes Fehlererkennungsmittel (71) aufweist und das Fahrzeug (2) ein zweites Fehlererkennungsmittel (72) aufweist.

16. Fahrzeugsteuersystem nach Anspruch 15, wobei die erste Datenleitung (21) und die zweite Datenleitung (22) als ein Schleifleitungsnetzwerk (63) zwischen der Steuereinheit (10) und dem Fahrzeug (2) ausgestaltet ist und im Falle einer Störung des Datenaustauschs in dem Schleifleitungsnetzwerk (63) diese Störung mittels der Fehlererkennungsmittel (71,72) erkennbar ist, insbesondere im Falle eines Kurzschlusses zwischen zwei Fahrsegmenten (51,52) hervorgerufen durch einen Stromabnehmer (65,65') des Fahrzeuges (2), welches von einem Fahrsegment (31) auf ein benachbartes Fahrsegment (52) fährt.

17. Fahrzeugsteuersystem nach einem der Ansprüche 11 bis 16, wobei die erste Recheneinheit (14) dazu ausgestaltet ist, das erste Schaltmittel (S1) derart zu steuern, dass dem Wechselsignal (3) durch Schalten des Schaltmittels (S1) die Binärwerte aufgeprägt werden, indem eine Halbwelle unterdrückt wird.

## Claims

1. Method for data exchange in a transport system (1), wherein
- control commands (F) are transferred from a control unit (10) to a vehicle (2) via a first data line (21)and
- status messages (S) are transferred from the vehicle (2) to the control unit (10) via a second data line (22), wherein
- a changeover signal (3)is provided by means of a signal generator (11,12,13), and the changeover signal (3) is switched to the first data line (21) and to the second data line (22), wherein
- the changeover signal (3) is changed in its time sequence, in order, by means of the changes, to transfer the control commands (F) and the status messages (S),
**characterised in that**
- in the control unit (10) a first switching means (S1) is operated, for changing the positive half-waves of the changeover signal (3), and in the
- vehicle (2) a second switching means (S2) is operated, for changing the negative half-waves of the changeover signal (3) in a circuit (20) formed by the first and second data lines (21, 22), in such a way that the control commands (F) or the status messages (S) are transferred as binary values between the control unit (10) and the vehicle (2) and vice versa, wherein the data exchange of the control commands (F) and status messages (S) is merged into one another by the positive and negative half-wave by way of the changed changeover signal (3').

2. Method according to claim 1, wherein
- a first decoupling means (30) is located in the control unit (10), in order to conduct the negative half-waves to a first evaluation means (R1) and thereby detect the status messages (S), and
- a second decoupling means (30') is located in the vehicle (2), in order to conduct the positive half-waves to a second evaluation means (R2), and thereby detect the control commands (F).

3. Method according to claim 1 or 2, wherein
the signal generator (11,12,13) is operated in such a way that it provides the changeover signal (3) for a limited period of time (40) as a message packet (41), and this provision of the message packet (41) is repeated cyclically.

4. Method according to claim 3, wherein each message packet (41) is provided with a start identifier signal (42), which differs in a frequency, a waveform, or an amplitude from a carrier signal of the changeover signal (3), and a start point (43) of the message packet (41) is thereby identified.

5. Method according to one of claims 1 to 4, wherein a plurality of travel segments (51,52,53) are used in the transport system (1) as transport paths for the vehicle (2), wherein a signal generator (11,12,13) is allocated to each travel segment (51,52,53).

6. Method according to claim 5, wherein, in the transport system (1), a travel segment (51) or a plurality of travel segments (51,52,53) in each case form a group (61, 62), and the signal generators (11,12,13) contained in the groups (61, 62) are jointly synchronised.

7. Method according to one of claims 1 to 6, wherein a checksum is formed in each case for the control commands (F) and for the status messages (S) and is likewise transferred.

8. Method according to one of claims 5 to 7, wherein a loop network (63) is formed with the first data line (21) and the second data line (22) between the control unit (10) and the vehicle (2), and, in the event of a fault in the data exchange in the loop network (63), this fault is identified by a securing mechanism, in particular in the event of a short-circuit between two travel segments (51, 52) incurred by a collector (65, 65') of the vehicle (2), which is travelling from one travel segment (51) to an adjacent travel segment (52).

9. Vehicle control system for data exchange between a control unit and a vehicle in a transport system (1), wherein
- the control unit (10) is designed such as to transfer control commands (F) to the vehicle (2) via a first data line (21) and
- the vehicle (2) is designed such as to transfer status messages (S) to the control unit (10) via a second data line (22), wherein
- a signal generator (11,12,13) is connected to the first data line (21) and to the second data line (22), and provides a changeover signal (3), which is changed in terms of its temporal curve, in order to transfer the control commands (F) and the status messages (S) by way of the changes,
**characterised in that**
- arranged in the control unit (10) is a first switching means (S1) for changing the positive half-waves of the changeover signal (3), and
- arranged in the vehicle (2) is a second switching means (S2) for changing the negative half-waves of the changeover signal (3) in a circuit (20) formed by the first and second data lines (21, 22), in order to transfer the control commands (F) or status messages (S) binary values between the control unit (10) and the vehicle (2) and vice versa, wherein the data exchange of the control commands (F) and the status messages (S) is merged into one another by the positive and negative half-wave by means of the changed change-over signal.

10. Vehicle control system according to claim 9, wherein
- arranged in the control unit (10) is a first decoupling means (30), which is in connection with a first evaluation means (R1) in order to conduct the negative half-waves to the first evaluation means (R1), and thereby to detect the status messages (S) and
- arranged in the vehicle (2) is a second decoupling means (30'), which is in connection with a second evaluation means (R2) in order to conduct the positive half-waves to the second evaluation means (R2), and thereby to detect the control commands (F).

11. Vehicle control system according to claim 9 or 10, wherein the signal generator (11,12,13) is in connection with a first arithmetic unit and the first arithmetic unit (14) is designed such that it controls the signal generator (11,12,13) in such a way that the changeover signal (3) is provided for a limited period of time (40) as a message packet (41), and this provision of the message packet (41) is repeated cyclically.

12. Vehicle control system according to claim 11, wherein each message packet (41) exhibits a start identifier signal (42), which differs in a frequency, a waveform, or an amplitude from a carrier signal of the changeover signal (3), and thereby identifies a start point (43) of the message packet (41).

13. Vehicle control system according to one of claims 9 to 12, wherein the transport system (1) has a plurality of travel segments (51,52,53) as transport paths for the vehicle (2), wherein a signal generator (11,12,13) is allocated to each travel segment (51,52,53).

14. Vehicle control system according to claim 13, wherein, in the transport system (1), a travel segment (51) is formed, or a plurality of travel segments (51,52,53) are formed as a group (61,62), and the signal generators (11,12,13) contained in the groups (61,62) have a jointly synchronisation means (66).

15. Vehicle control system according to one of claims 9 to 14, wherein the control unit (10) has a first error identification means (71) and the vehicle (2) has a second error identification means (72).

16. Vehicle control system according to claim 15, wherein the first data line (21) and the second data line (22) are designed as a loop network (63) between the control unit (10) and the vehicle (2), and, in the event of a fault in the data exchange in the loop network (63), this fault can be identified by means of the error identification means (71,72), in particular in the event of a short-circuit between two travel segments (51,52) incurred by a collector (65,65') of the vehicle (2), which is travelling from one travel segment (31) to an adjacent travel segment (52).

17. Vehicle control system according to one of claims 11 to 16, wherein the first arithmetic unit (14) is designed such as to control the first switching means (S1) in such a way that, by switching the switching means (S1), the binary values are imposed on the changeover signal in which a half-wave is suppressed.

## Revendications

1. Procédé d'échange de données dans un système (1) de transport, dans lequel on transmet
- des instructions (F) de commande d'une unité ( 10 ) de commande à un véhicule ( 2 ) par une première ligne ( 21 ) de données et
- des messages ( S ) d'état du véhicule ( 2 ) à l'unité ( 10 ) de commande par une deuxième ligne ( 22 ) de données, dans lequel
- par un producteur ( 11, 12, 13 ) de signaux, on met à disposition un signal ( 3 ) alternatif et on applique le signal ( 3 ) alternatif à la première ligne ( 21 ) de données et à la deuxième ligne ( 22 ) de données, dans lequel
- on modifie la variation dans le temps du signal ( 3 ) alternatif pour transmettre par les variations les instructions ( F ) de commande et par les messages ( S ) d'état,
**caractérisé en ce que** l'on fait fonctionner
- dans l'unité de commande un premier moyen ( S1 ) de commutation pour modifier les demi-ondes positives du signal ( 3 ) alternatif et
- dans le véhicule ( 2 ) un deuxième moyen ( S2 ) de commutation pour modifier les demi-ondes négatives du signal ( 3 ) alternatif dans un circuit ( 20 ) de courant formé par la première et par la deuxième lignes ( 21, 22 ) de données de manière à ce que les instructions ( F ) de commande ou les messages ( S ) d'état soient transmis sous la forme de valeurs binaires entre l'unité ( 10 ) de commande et le véhicule ( 2 ) et inversement, les échanges de données des instructions ( F ) de commande et des messages ( S ) d'état par le signal ( 3' ) alternatif modifié étant imbriqués l'un dans l'autre par les demi-ondes positives et par les demi-ondes négatives.

2. Procédé suivant la revendication 1, dans lequel
- on utilise dans l'unité ( 10 ) de commande un premier moyen ( 30 ) de découplage pour envoyer les demi-ondes négatives à un premier moyen ( R1 ) d'exploitation et détecter ainsi les messages ( S ) d'état et
- on utilise dans le véhicule ( 2 ) un deuxième moyen ( 30' ) de découplage pour envoyer les demi-ondes positives à un deuxième moyen ( R2 ) d'exploitation et détecter ainsi les instructions ( F ) de commande.

3. Procédé suivant la revendication 1 ou 2, dans lequel on fait fonctionner le producteur ( 11, 12, 13 ) de signaux de manière à ce qu'il mette à disposition le signal ( 3 ) alternatif pour une durée ( 40 ) limitée dans le temps sous la forme d'un paquet ( 41 ) de télégramme et on répète cycliquement cette mise à disposition du paquet ( 41 ) de télégramme.

4. Procédé suivant la revendication 3, dans lequel on munit chaque paquet ( 41 ) de télégramme d'un signal ( 42 ) initial de caractérisation, qui se distingue par une fréquence, une forme de courbe ou une amplitude d'un signal porteur du signal ( 3 ) alternatif et on caractérise ainsi un point ( 43 ) de début du paquet ( 41 ) de télégramme.

5. Procédé suivant l'une des revendications 1 à 4, dans lequel on utilise dans le système ( 1 ) de transport une multiplicité de segments ( 51, 52, 53 ) de circulation comme voies de transport pour le véhicule ( 2 ), un producteur ( 11, 12, 13 ) de signaux étant affecté à chaque segment ( 51, 52, 53 ) de circulation.

6. Procédé suivant la revendication 5, dans lequel, dans le système ( 1 ) de transport un segment ( 51 ) de circulation ou une multiplicité de segments ( 51, 52, 53 ) de circulation forme respectivement un groupe ( 61, 62 ) et les producteurs ( 11, 12, 13 ) de signaux contenus dans les groupes ( 61, 62 ) sont synchronisés en commun.

7. Procédé suivant l'une des revendications 1 à 6, dans lequel on forme respectivement une somme de contrôle pour les instructions ( F ) de commande et pour les commandes ( S ) d'état et on la transmet également.

8. Procédé suivant l'une des revendications 5 à 7, dans lequel on forme, par la première ligne ( 21 ) de données et par la deuxième ligne de données, un réseau ( 63 ) de ligne en boucle entre les dispositifs ( 12 ) de commande et le véhicule ( 2 ) et, s'il se produit une perturbation de l'échange de données dans le réseau ( 63 ) de ligne en boucle, on reconnaît cette perturbation par un mécanisme de sécurité, notamment dans le cas d'un court-circuit entre deux segments ( 51, 52 ) de circulation provoqué par une prise ( 65, 65' ) de courant du véhicule ( 2 ), qui passe d'un segment ( 51 ) de circulation à un segment ( 52 ) de circulation voisin.

9. Système de commande de véhicule pour l'échange de données entre une unité de commande et un véhicule dans un système ( 1 ) de transport, dans lequel
- l'unité ( 10 ) de commande est conformée pour transmettre des instructions ( F ) de commande au véhicule ( 2 ) par une première ligne ( 21 ) de données et
- le véhicule ( 2 ) est conformé pour transmettre des messages ( S ) d'état à l'unité ( 10 ) de commande par une deuxième ligne ( 22 ) de données, dans lequel
- un producteur ( 11, 12, 13 ) de signaux est raccordé à la première ligne ( 21 ) de données et à la deuxième ligne ( 22 ) de données et met à disposition un signal ( 3 ) alternatif qui est modifié dans sa variation dans le temps pour transmettre par les variations les instructions ( F ) de commande et les messages ( S ) d'état,
**caractérisé en ce qu'**il y a
- dans l'unité ( 10 ) de commande un premier moyen ( S1 ) de commutation pour modifier les demi-ondes positives du signal ( 3 ) alternatif et
- dans le véhicule ( 2 ) un deuxième moyen ( S2 ) de commutation pour modifier les demi-ondes négatives du signal ( 3 ) alternatif dans un circuit ( 20 ) de courant formé par la première et la deuxième lignes ( 21, 22 ) de données, afin de transmettre pour les instructions ( F ) de commande et les messages ( S ) d'état sous la forme de valeurs binaires entre l'unité ( 10 ) de commande et le véhicule ( 2 ) et inversement, les échanges de données des instructions ( F ) de commande et des messages ( S ) d'état par le signal ( 3' ) alternatif modifié étant imbriqués l'un dans l'autre par les demi-ondes positives et par les demi-ondes négatives.

10. Système de commande de véhicule suivant la revendication 9, dans lequel
- dans l'unité ( 10 ) de commande est disposé un premier moyen ( 30 ) de découplage, qui est en liaison avec un premier moyen ( R1 ) d'exploitation pour envoyer les demi-ondes négatives au premier moyen ( R1 ) d'exploitation et détecter ainsi les messages ( S ) d'état et
- dans le véhicule est disposé un deuxième moyen ( 30' ) de découplage, qui est en liaison avec un deuxième moyen ( R2 ) d'exploitation pour envoyer les demi-ondes positives au deuxième moyen ( R2 ) d'exploitation et détecter ainsi les instructions ( F ) de commande.

11. Système de commande de véhicule suivant la revendication 9 ou 10, dans lequel le producteur ( 11, 12, 13 ) de signaux est en liaison avec une première unité ( 14 ) informatique et la première unité ( 14 ) informatique est conformée de manière à commander le producteur ( 11, 12, 13 ) de signaux de façon à mettre le signal ( 3 ) alternatif pendant une durée ( 40 ) limitée dans le temps à disposition sous la forme d'un paquet ( 41 ) de télégramme et à répéter cycliquement cette mise à disposition du paquet ( 41 ) du télégramme.

12. système de commande de véhicule suivant la revendication 11, dans lequel chaque paquet ( 41 ) de télégramme a un signal ( 42 ) initial de caractérisation, qui se distingue par une fréquence, une forme de courbe ou une amplitude d'un signal porteur du signal ( 3 ) alternatif et on caractérise ainsi un point ( 43 ) de début du paquet ( 41 ) de télégramme.

13. Système de commande de véhicule suivant l'une des revendications 9 à 12, dans lequel on utilise dans le système ( 1 ) de transport une multiplicité de segments ( 51, 52, 53 ) de circulation comme voies de transport pour le véhicule ( 2 ), un producteur ( 11, 12, 13 ) de signaux étant affecté à chaque segment ( 51, 52, 53 ) de circulation.

14. Système de commande de véhicule suivant la revendication 13, dans lequel dans le système ( 1 ) de transport un segment ( 51 ) de circulation ou une multiplicité de segments ( 51, 52, 53 ) de circulation sont constitués sous la forme d'un groupe ( 61, 62 ) et les producteurs ( 11, 12, 13 ) de signaux contenus dans les groupes ( 61, 62 ) ont un moyen ( 66 ) commun de synchronisation.

15. Système de commande de véhicule suivant l'une des revendications 9 à 14, dans lequel l'unité ( 10 ) de commande a un premier moyen ( 71 ) de reconnaissance d'erreur et le véhicule ( 2 ) a un deuxième moyen ( 72 ) de reconnaissance d'erreur.

16. Système de commande de véhicule suivant la revendication 15, dans lequel la première ligne ( 21 ) de données et la deuxième ligne ( 22 ) de données sont conformées sous la forme d'un réseau ( 63 ) de ligne en boucle entre l'unité ( 10 ) de commande et le véhicule ( 2 ) et, s'il se produit une perturbation de l'échange de données dans le réseau ( 63 ) de lignes en boucle, cette perturbation peut être reconnue à l'aide des moyens ( 71, 72 ) de reconnaissance d'erreur, notamment dans le cas d'un court-circuit entre deux segments ( 51, 52 ) de circulation provoqué par une prise ( 65, 65' ) de courant du véhicule ( 2 ), qui va d'un segment ( 31 ) de circulation à un segment ( 52 ) de circulation voisin.

17. Système de commande de véhicule suivant l'une des revendications 11 à 16, dans lequel la première unité ( 14 ) d'informatique est conformée pour commander le premier moyen ( Sel) de commutation de façon à appliquer les valeurs binaires au signal ( 3 ) alternatif par commutation du moyen ( S1 ) de commutation, en supprimant une demi-onde.
